# DEMANDE DE BREVET EUROPEEN

(11) **EP 1 075 154 A1**
(43) Date de publication de la demande: **07.02.2001**
(21) Numéro de dépôt: 00402061.6
(22) Date de dépôt: 20.07.2000
(51) Int. Cl.: H04Q 7/30

(54) **Réseau de télécommunications mobiles avec des contrôleurs de station de base chaines.**

(30) Priorité: 02.08.1999 FR 9910012
(71) Demandeur: ALCATEL, 75008 Paris (FR)
(72) Inventeur: Girardeau, Laurent, 95800 Cergy le Haut (FR); Roberts, Michael, 92200 Neuilly S/Seine (FR)
(74) Mandataire: El Manouni, Josiane

(57) **Abrégé**

L'invention concerne un réseau de télécommunication mobiles, présentant un centre de commutation de mobiles (1), un contrôleur de stations de base (2), et une pluralité de stations de base (3) reliées au contrôleur de station de base (2) par une interface (6) dépendant des ressources radio.

Elle propose de prévoir un contrôleur de stations de base relais (10), entre le centre de commutation de mobiles (1) et le contrôleur de stations de base (2). L'interface (11) entre le contrôleur relais et le centre de commutation de mobile est indépendante des ressources radio, tout comme l'interface (12) entre le contrôleur relais (10) et le contrôleur (2).

L'invention permet une grande souplesse dans l'architecture du réseau, en reléguant la gestion des ressources radio au niveau le plus proche des stations de base.

## Description

La présente invention concerne le domaine des réseaux de télécommunications mobiles ou réseaux de radio-communications, et plus particulièrement, les réseaux mettant en oeuvre des transmissions numériques. De façon connue en soi, de tels réseaux sont formés de cellules, comprenant chacune une station de base chargée d'assurer les communications avec les mobiles présents dans la cellule. Les stations de base sont reliées à un contrôleur de stations de base. Diverses normes ont déjà été définies pour les systèmes de télécommunications terrestres à terminaux mobiles, notamment les normes GSM et DCS.

Selon la norme GSM, chaque station de base (BTS pour les termes anglais "base transceiver station") émet dans une cellule des messages de signalisation sur un canal balise (acronyme BCCH pour les termes anglais "broadcast control channel"); ce canal balise sert en outre à l'identification de la cellule. Un canal RACH (acronyme de l'anglais "Random Access CHannel") est utilisé pour les messages de signalisation provenant des mobiles. Ce canal permet aux mobiles lors d'une phase d'initialisation d'une communication, d'émettre soit une requête (appel montant), soit un message d'acquittement (appel descendant).

Des stations de base ou BTS voisines sont reliées à un contrôleur de station de base ou BSC (acronyme de l'anglais "base station controller"), qui centralise les communications de plusieurs stations de base. Le contrôleur de stations de base gère l'allocation des ressources radio entre les différentes stations de base; il gère aussi le passage d'un mobile d'une station de base à une autre au cours de la communication (en anglais "handover"). De ce fait, l'interface entre les stations de base et un contrôleur de stations de base, connue dans le cas du GSM sous l'appellation d'interface "Abis" est une interface dépendante des ressources radio.

Les contrôleurs de stations de base sont reliés à des centres de commutation de mobiles (MSC ou "mobile switching center" en langue anglaise), suivant un protocole, qui n'est pas dépendant des ressources radio. Le protocole utilisé par les contrôleurs de stations de base vers les centres de commutation de mobiles est un protocole appelé "A", qui est indépendant des ressources radio.

Un des problèmes qui se pose dans le réseau GSM, comme aussi dans les réseaux présentant une architecture cellulaire analogue, est celui de la concentration des communications. Dans le réseau GSM, la concentration des communications s'effectue au niveau du contrôleur de station de base BSC. La concentration des communications permet de traiter un plus grand nombre de communications avec des ressources données, et est donc intimement reliée au nombre d'abonnés possible et au coût des services de communication fournis par le réseau.

A titre d'exemple de configuration d'un réseau GSM, un contrôleur de station de base peut gérer 100 liaisons à 2 MB/S, qu'il répartit entre les différents stations de base. Entre ce contrôleur de stations de base et le centre de commutation de mobile correspondant, on peut prévoir 20 liaisons à 2 MB/S. Cette capacité additionnelle des contrôleurs de stations de base est nécessaire pour assurer la répartition des ressources radio entre les différentes stations de base.

L'invention propose une solution permettant de limiter les capacités additionnelles présentes dans le réseau, au niveau des stations de base. Elle permet une concentration des communications au niveau de la cellule d'un réseau de transmission, sans qu'il soit nécessaire de développer une nouvelle interface entre la station de base et le contrôleur de station de base.

L'invention permet en outre une mise à jour et une amélioration de la capacité des réseaux existants, sans impliquer de modifications des stations de base dans toutes les cellules. Elle permet de changer la configuration des réseaux, pour passer à des réseaux en étoile-étoile (en anglais "star-star") plus efficaces. Elle permet aussi d'augmenter la capacité des réseaux existants, par ajout de nouvelles stations de base.

La solution de l'invention est facilement compatible avec les développements futurs de la norme GSM, comme le GPRS (en anglais "general packet radio service" ou service paquet radio généralisé), le HSCSD (acronyme de l'anglais "high speed circuit switched data") ou l'UMTS (acronyme de l'anglais "universal mobile téléphone service").

Plus précisément, l'invention propose un réseau de télécommunication mobiles, présentant un centre de commutation de mobiles, un contrôleur de stations de base relais relié au centre de commutation de mobiles par une interface indépendante des ressources radio, un contrôleur de stations de base relié au contrôleur de stations de base relais par une interface indépendante des ressources radio, et une pluralité de stations de base reliées au contrôleur de station de base par une interface dépendant des ressources radio.

Dans un mode de réalisation préféré, le contrôleur de stations de base présente des moyens d'allocation des ressources radio entre les stations de base qui lui sont reliées.

Dans un autre mode de réalisation préféré, le réseau comprend en outre un deuxième contrôleur de stations de base relais relié au dit contrôleur de stations de base relais par une interface indépendante des ressources radio, un contrôleur de stations de base relié au deuxième contrôleur de stations de base relais par une interface indépendante des ressources radio, et une pluralité de stations de base reliées au contrôleur de station de base par une interface dépendant des ressources radio.

Dans encore un autre mode de réalisation préféré, le réseau présente en outre une pluralité de stations de base reliée au dit contrôleur de stations de base relais par une interface dépendant des ressources radio, le contrôleur de stations de base relais présentant des moyens d'allocation des ressources radio entre les stations de base qui lui sont reliées. Les moyens d'allocation des ressources radio du contrôleur de stations de base relais peuvent ne gèrer que les ressources radio des stations de base reliées au dit contrôleur de stations de base relais.

D'autres caractéristiques et avantages de l'invention apparaîtront à la lecture de la description qui suit de modes de réalisation de l'invention, donnée à titre d'exemple et en référence aux dessins annexés, qui montrent:
- figure 1, une représentation schématique de la structure d'un réseau de télécommunications mobiles classique
- figure 2, une représentation schématique de la structure d'un réseau de télécommunications mobiles selon l'invention;
- figure 3, un exemple d'architecture d'un réseau selon l'invention.

Dans la suite, l'invention est décrite en référence au cas d'un réseau de type GSM. Elle n'est toutefois pas limitée à un tel réseau et s'applique aussi à d'autres normes que la norme GSM.

L'invention repose sur la constatation que la limitation dans un réseau de type GSM réside dans le fait que l'interface Abis entre les stations de base et un contrôleur de stations de base est une interface dépendante des ressources radio.

Elle propose d'ajouter dans la structure du réseau des contrôleurs de stations de base relais, entre les contrôleurs de stations de base classiques, et les centres de commutation de mobiles. Ces contrôleurs de stations de base relais communiquent normalement avec les centres de commutation de mobiles, par les protocoles habituels. Avec les contrôleurs de stations de base classiques, les nouveaux contrôleurs de stations de base communiquent par un protocole indépendant des ressources radio; des exemples de protocoles possibles sont donnés plus bas. On obtient ainsi des contrôleurs de stations de base "chaînés".

L'invention permet de la sorte une plus grande flexibilité dans la structure des réseaux. Elle permet d'effectuer la commutation et la gestion des ressources radio à l'interface la plus basse possible dans le réseau, et de la sorte, permet de limiter la quantité des ressources nécessaires.

Comme l'invention n'implique pas une modification de l'interface entre les stations de base et les contrôleurs de stations de base, elle peut être mise en oeuvre dans un réseau existant, sans modifications matérielles ou logicielles au niveau des stations de base.

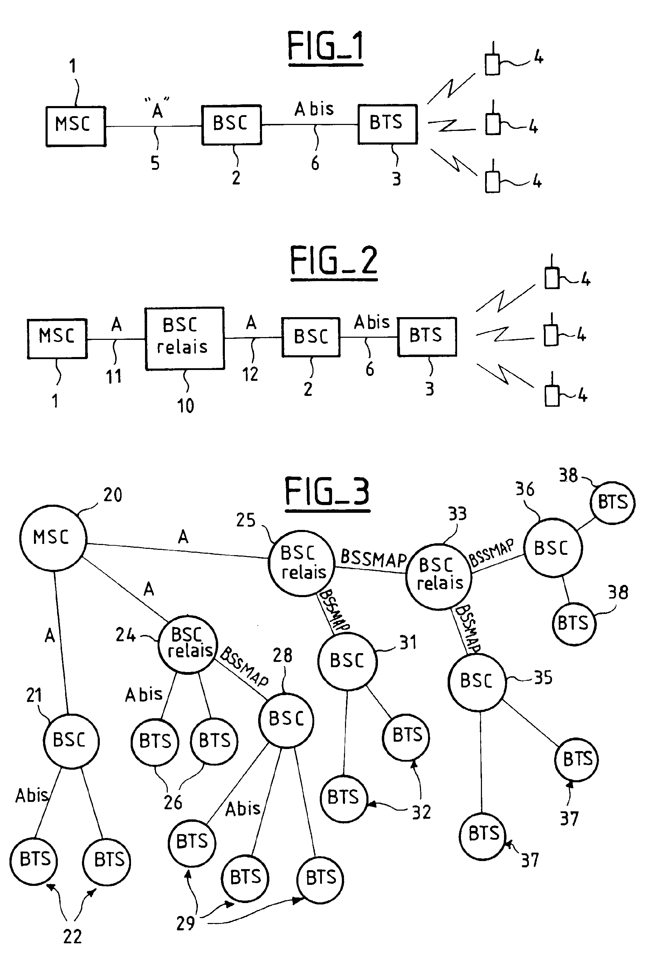

La figure 1 montre une représentation schématique de la structure d'un réseau de télécommunications mobiles classique. On reconnaît sur la figure un centre de commutation de mobiles ou MSC 1, un contrôleur de stations de base ou BSC 2, et une station de base ou BTS 3. On a en outre porté à la figure des mobiles 4. La figure 1 montre uniquement les différents niveaux possibles dans le réseau; il est clair qu'un réseau réel comporte normalement plus d'un contrôleur de station de base par centre de commutation de mobile, et plus d'une station de base par contrôleur de stations de base. Comme expliqué plus haut, l'interface 5 entre le centre de commutation de mobiles 1 et le contrôleur de stations de base 2 est une interface qui ne dépend pas des ressources radio - l'interface "A" dans le cas du GSM. En revanche, le contrôleur de stations de base 2 gère l'allocation des ressources radio et la commutation pour les stations de base 3 qui lui sont rattachées. L'interface 6 entre le contrôleur de stations de base 2 et les stations de base 3 est donc une interface dépendant des ressources radio - l'interface "Abis" dans le cas du GSM.

La figure 2 montre, de façon analogue à la figure 1, la structure d'un réseau selon l'invention. On reconnaît sur la figure 2 les éléments de la figure 1, à savoir le centre de commutation de mobiles 1, un contrôleur de stations de base 2, et une station de base 3. L'invention propose d'ajouter dans cette structure un contrôleur de stations de base relais 10, entre le centre de commutation de mobiles 1 et le contrôleur de stations de base 3. L'interface 11 entre le centre de commutation de mobiles 1 et le contrôleur de stations de base relais 10 peut comme dans l'art antérieur être une interface indépendante des ressources radio, à savoir l'interface "A" dans le cas du GSM. L'invention peut donc être mise en oeuvre de façon transparente pour les centres de commutation de mobiles d'un réseau existant.

L'invention propose que l'interface 12 entre le contrôleur de stations de base relais 10 et le contrôleur de station de base 2 soit aussi une interface indépendante des ressources radio. C'est en cela que le contrôleur de stations de base relais 10 mérite son appellation : il agit vis-à-vis du centre de commutation de mobiles 1 comme un contrôleur de stations de base; toutefois, il ne gère pas la commutation ni les ressources radio, et n'est en fait qu'un relais vers le contrôleur de station de base 2 reliés aux stations de base 3.

Cette interface 12 indépendante des ressources radio peut être dans un premier mode de réalisation de l'invention simplement une interface "A", identique à celle qui existe entre les centres de commutation de mobiles et les contrôleurs de stations de base. Dans un autre mode de réalisation de l'invention, cette interface 12 peut être une interface de type "Abis", modifiée de sorte à en extraire les aspects dépendants des ressources radio. Ces deux solutions sont les solutions les plus simples à mettre en oeuvre à partir des matériels existants, mais d'autres solutions sont possibles. Une interface de type BSSMAP (acronyme de l'anglais "base station system management application part") entre les contrôleurs de stations de base relais et les contrôleurs de stations de base est possible.

La structure de la figure 2 permet une plus grande souplesse dans la définition des réseaux, et peut aussi s'adapter aux réseaux existants. On peut aussi prévoir plusieurs niveaux de contrôleurs de stations de base relais 10, qui seraient chaînés les uns aux autres.

La figure 3 montre une représentation schématique de l'architecture d'un réseau de télécommunications mobiles selon l'invention. On a utilisé dans le réseau de la figure 3 la structure représentée à la figure 2, avec un centre de commutation de mobiles, des contrôleurs de stations de base relais, des contrôleurs de stations de base et des stations de base. Comme le montre la figure, le réseau présente un centre de commutation de mobiles 20. Un premier contrôleur de stations de base 21 y est relié. Dans l'exemple de la figure, ce contrôleur 21 est un contrôleur de stations de base classique, et il gère les ressources radio entre les différentes stations de base 22 qui lui sont reliées.

Deux contrôleurs de stations de base relais 24 et 25 selon l'invention sont aussi reliés au centre de commutation de mobiles 20 au contrôleur de stations de base relais 24 est reliée un contrôleur de stations de base 28, avec des stations de base 29. Des stations de base 26 sont aussi reliées au contrôleur de stations de base relais 24.

Au contrôleur de station de base relais 25 est relié un premier contrôleur de stations de base 31, avec des stations de base 32. Un troisième contrôleur de stations de base relais 33 est aussi relié au contrôleur de stations de base relais 25. Des contrôleurs de stations de base 35 et 36 avec des stations de base associées 37 et 38, respectivement, sont aussi reliés au contrôleur de station de base relais 25.

Sur la figure sont aussi portés les interfaces utilisés entre les différents éléments du réseau. Comme expliqué plus haut, l'interface entre le centre de commutation de mobiles 20 et les contrôleurs de stations de base classiques ou les contrôleurs de stations de base relais est une interface "A". Les interfaces entre les contrôleurs de stations de base relais 24 et 25 et les contrôleurs de stations de base qui y sont reliées sont indépendantes des ressources radio, et dans l'exemple sont aussi des interfaces de type "BSSMAP" dérivées de l'interface "A".

Il en est de même de l'interface entre le troisième contrôleur de stations de base relais 33 et les contrôleurs de stations de base 35 et 36.

La figure 3 montre les différentes applications possibles de l'invention. La présence du contrôleur de stations de base 21 montre que l'invention peut être mise en oeuvre dans un réseau existant, sans modifier les parties existantes du réseau - dans l'exemple le contrôleur de stations de base 21 et les stations de base 22.

Le contrôleur de stations de base relais 24 montre un exemple d'extension des capacités existantes d'un réseau grâce à l'invention. Le contrôleur 24 agit comme un contrôleur de stations de base classique à l'égard des stations de base 26, qui peuvent correspondre à des parties existantes du réseau. Le contrôleur 24 gère donc l'allocation des ressources radio entre les stations de base 26. Toutefois, à l'égard du contrôleur de stations de base 28, le contrôleur 24 agit comme contrôleur de stations de base relais, et ne gère pas l'allocation des ressources radio.

De la sorte, une modification minime d'un contrôleur de stations de base existant, pour lui permettre d'agir aussi comme contrôleur de stations de base relais, permet d'augmenter les capacités d'un réseau existant; dans l'exemple de la figure, cette augmentation de capacité correspond à l'adjonction du contrôleur de stations de base 28 et des stations de base 29 afférentes.

On notera qu'il est en fait possible d'adjoindre à un réseau existant des contrôleurs de stations de base d'un type distinct. Dans la mesure où l'interface entre le contrôleur 24 et le contrôleur 28 ne dépend pas des ressources radio, le contrôleur 28 peut être d'un type distinct. Il pourrait s'agir d'un contrôleur selon la norme UMTS, ou plus généralement d'un dispositif quelconque qui gère les ressources radio à son niveau local. On pourrait ainsi imaginer relier au contrôleur relais 24 une station de base gérant localement l'allocation des ressources radio.

Dans un tel cas où des éléments non spécifiquement GSM sont reliés à un contrôleur de stations de base relais, il est préférable que l'interface entre le centre de commutation de mobiles et le contrôleur relais soit effectivement indépendante des ressources radio. Ceci n'est pas nécessairement le cas en GSM, dans la mesure où le centre de commutation de mobile choisit un TRAU (acronyme de l'anglais "transcoder/rate adapter unit") pour la liaison avec un contrôleur. Or un TRAU présente des fonctionnalités dépendantes des ressources radio, ce qui implique que le choix du TRAU par le centre de commutation de mobiles soit effectué en connaissance des ressources radio disponibles aux niveaux inférieurs. Il est toutefois prévu dans la norme GSM qu'un contrôleur de stations de base puisse effectuer le choix du TRAU. On peut donc prévoir que si l'usage de l'invention conduit à ajouter des éléments non spécifiés dans la norme GSM à un réseau GSM, le choix du TRAU s'effectuera au niveau du contrôleur relais auquel sont reliés les éléments non-GSM. On assure de la sorte que l'interface entre le centre de commutation de mobiles et le contrôleur de station de base est effectivement indépendante des ressources radio, et peut accepter des ressources radio non-spécifiquement GSM.

Le contrôleur de stations de base relais 25 et les dispositifs qui y sont reliés montrent que l'invention permet de prévoir non seulement un niveau de contrôleurs de stations de base relais - par exemple entre le centre de commutation de mobiles 20 et le contrôleur de stations de base 31 - mais deux niveaux de contrôleurs de stations de base relais. Ainsi, sur la figure, sont représentés deux contrôleurs de stations de base 25 et 33 entre le centre de commutation de mobiles 20 et le contrôleur de stations de base 36. Il est clair au-delà de cet exemple que le nombre de niveaux de contrôleurs de stations de base n'est pas limité.

Dans un réseau mettant en oeuvre l'invention, la concentration s'effectue au niveau des contrôleurs de stations de base auxquels sont effectivement reliés des stations de base. De fait, ces contrôleurs de stations de base gèrent classiquement les ressources radio des différentes stations de base. L'introduction selon l'invention de contrôleurs de stations de base relais n'implique pas de capacités supplémentaires, dans la mesure où les interfaces entre les contrôleurs relais et les contrôleurs classiques ne dépendent pas des ressources radio. Pour reprendre l'exemple donné plus haut, la capacité possible entre un contrôleur relais et un contrôleur classique peut typiquement être de 10 liaisons à 2 MB/s, à comparer à la capacité totale gérée par un contrôleur classique, qui est de 100 liaisons à 2 MB/s.

L'invention permet ainsi des augmentations de capacité des réseaux existants, et des économies de coûts de transmission, en reléguant la gestion des ressources radio aux niveaux inférieurs du réseau, où elle s'avère effectivement utile.

Les contrôleurs de stations de base relais peuvent aussi agir pour le transfert des communications (en anglais "handover") entre les contrôleurs de stations de base de niveaux inférieur. Ainsi, dans l'exemple de la figure, le contrôleur relais 33 peut servir pour la gestion du transfert des communications entre les contrôleurs 35 et 36. On améliore ainsi le transfert des communications entre les stations de base dépendant de contrôleurs distincts.

Bien entendu, la présente invention n'est pas limitée aux exemples et modes de réalisation décrits et représentés, mais elle est susceptible de nombreuses variantes accessibles à l'homme de l'art. Ainsi, l'invention a été décrit dans le cas préféré du GSM. Elle s'applique aussi à d'autres normes de réseaux de télécommunications, qui présentent une architecture de même type.

## Revendications

1. Un réseau de télécommunication mobiles, présentant un centre de commutation de mobiles (1), un contrôleur de stations de base relais (10) relié au centre de commutation de mobiles par une interface (11) indépendante des ressources radio, un contrôleur de stations de base (2) relié au contrôleur de stations de base relais par une interface (12) indépendante des ressources radio, et une pluralité de stations de base (3) reliées au contrôleur de station de base (2) par une interface (6) dépendant des ressources radio.

2. Le réseau selon la revendication 1, caractérisé en ce que le contrôleur de stations de base (2) présente des moyens d'allocation des ressources radio entre les stations de base (3) qui lui sont reliées.

3. Le réseau selon la revendication 1 ou 2, caractérisé en ce qu'il comprend en outre un deuxième contrôleur de stations de base relais (33) relié au dit contrôleur de stations de base relais (25) par une interface indépendante des ressources radio, un contrôleur de stations de base (35, 36) relié au deuxième contrôleur de stations de base relais par une interface indépendante des ressources radio, et une pluralité de stations de base (37, 38) reliées au contrôleur de station de base (35, 36) par une interface dépendant des ressources radio.

4. Le réseau selon la revendication 1, 2 ou 3, caractérisé en ce qu'il présente en outre une pluralité de stations de base (26) reliée au dit contrôleur de stations de base relais (24) par une interface dépendant des ressources radio, le contrôleur de stations de base relais présentant des moyens d'allocation des ressources radio entre les stations de base qui lui sont reliées.

5. Le réseau selon la revendication 4, caractérisé en ce que les moyens d'allocation des ressources radio du contrôleur de stations de base relais ne gèrent que les ressources radio des stations de base reliées au dit contrôleur de stations de base relais.
